# EUROPEAN PATENT APPLICATION

(11) **EP 4 442 452 A1**
(43) Date of publication of application: **09.10.2024**
(21) Application number: 24168754.0
(22) Date of filing: 05.04.2024
(51) Int. Cl.: B32B 15/14, B32B 7/12, B32B 15/20, B32B 27/32, B32B 27/34, B32B 27/36

(54) **FILM FOR CELL POUCH AND MANUFACTURING METHOD THEREOF**

(30) Priority: 06.04.2023 KR 20230045258
(71) Applicant: Youlchon Chemical Co., Ltd., Seoul 07057 (KR)
(72) Inventor: SONG, Nok Jung, 07057 Seoul (KR); HAN, Hee Sik, 15430 Ansan-si (KR); KIM, Huihun, 15430 Ansan-si (KR); LEE, Ji Min, 15430 Ansan-si (KR); PARK, Han Chul, 15430 Ansan-si (KR); LEE, Doohee, 15430 Ansan-si (KR); KIM, Geon Ryong, 15430 Ansan-si (KR); SHIN, Sung Chul, 15430 Ansan-si (KR); SONG, Moonkyu, 15430 Ansan-si (KR)
(74) Representative: V.O.

(57) **Abstract**

The present disclosure is directed to a film for a cell pouch and a manufacturing method thereof. A cell pouch film and a manufacturing method thereof according to an example embodiment of the present disclosure has good mechanical strength, low deviation in mechanical strength due to low stress on the film, and good formability.

## Description

### [Technical Field]

The present disclosure discloses a film for a cell pouch and a manufacturing method thereof.

### [National R&D program that supported the present disclosure]

### [Assignment serial No.] 1415185612

### [Assignment No.] 20022450

### [Name of ministry] Ministry of Trade, Industry and Energy

### [(Professional) assignment management organization] Korea Evaluation Institute of Industrial Technology

### [Research project name] Material/Parts Package Type (Top Company)

### [Research assignment name] Development of a next-generation secondary battery pouch capable of realizing more than twice the high adhesive strength at 60°C

### [Contribution rate] 1/1

### [Name of agency in charge of assignment] Youlchon Chemical, Co., Ltd.

### [Research period] 2023.01.01 ~ 2023.12.31

### [Background Art]

Pouch-type batteries, which are generally used in electric vehicles, have the advantage of being easy to change shape and having a high energy density compared to cylindrical or prismatic batteries. These cell pouches are generally manufactured in the following order: a first process to process one side of a metal layer, a second process to process the other side of the metal layer, a third process to laminate an outer layer on one side, and a fourth process to laminate a sealant layer on the other side.

Korean Patent Publication Laid-open No. 10-2016-0070468 discloses such a process. However, according to this conventional process, the sequence of coating, drying, and winding is repeated for each process, which may increase the probability of traveling losses and process defects during the transportation of the fabric. In addition, the conventional process is slow, and the stress on the film is increased by multiple repeated windings. Furthermore, the tension of the drive roll that transports the film is high, causing a change in the tensile curve of the film, and the machine direction (longitudinal direction, MD) and transverse direction (TD) mechanical strength of the film changes.

### [References of the Related Art]

### [Patent Documents]

(Patent Document 1) Korean Patent Publication Laid-open No. 10-2016-0070468
(Patent Document 2) Korean Patent Publication Laid-open No. 10-2022-0031820

### [Disclosure of the Invention]

### [Technical Problem]

An object according to one aspect of the present disclosure is to provide a film for a cell pouch having good mechanical strength, low deviation in mechanical strength due to low stress on the film, and good formability, and a manufacturing method thereof.

### [Technical Solution]

According to one aspect of the present disclosure, the present disclosure provides a film for a cell pouch including a barrier layer made of metal and with surface treatment on both sides, adhesive layers formed on both sides of the barrier layer, and functional fabric layers formed on both sides of the adhesive layer, wherein the difference between a machine direction (MD) breaking strength and a transverse direction (TD) breaking strength is 40 N/15 mm or less.

According to another aspect, the present disclosure provides a cell pouch including the film for the cell pouch.

According to another aspect, the present disclosure provides a method of manufacturing a film for a cell pouch, including surface treating both sides of a metal fabric forming a barrier layer, coating one side by applying an adhesive to one side of the surface treated metal fabric to form an adhesive layer, and laminating a functional fabric to one side of the adhesive layer to form a functional fabric layer.

### [Advantageous Effects]

A film for a cell pouch and a manufacturing method thereof according to an example embodiment of the present disclosure has good mechanical strength and low stress on the film, resulting in low deviation in mechanical strength and good formability.

### [Brief Description of the Drawings]

FIG. 1 is a schematic diagram illustrating a cross-section of a film according to an example embodiment of the present disclosure.
FIG. 2 is a mimetic diagram illustrating a manufacturing device for a film for a cell pouch according to an example embodiment of the present disclosure.
FIG. 3 illustrates a stress-strain curve of a film for a cell pouch according to an example embodiment of the present disclosure.

### [Detailed Description of the Invention]

Example embodiments now will be described more fully hereinafter with reference to the accompanying drawings, in which example embodiments are shown.

The present disclosure may, however, be embodied in many different forms and should not be construed as limited to the example embodiments set forth therein. Rather, these example embodiments are provided so that the present disclosure will be thorough and complete, and will fully convey the scope of the present disclosure to those skilled in the art.

In the present disclosure, a description of a certain part "including" certain constituents means capable of further including other constituents, and does not exclude other constituents unless particularly stated on the contrary.

The same reference numerals are assigned to similar parts throughout the specification. Throughout the specification, when a part such as a layer, film, region, plate, etc. is the to be "on" or "on" another part, this includes not only the case directly above the other part, but also the case where there is another part in the middle. Throughout the specification, terms such as first and second may be used to describe various components, but the components should not be limited by terms. The terms are used only for the purpose of distinguishing one component from another.

As used herein, the "cell" means a battery, and has the widest meaning which all includes various batteries such as a secondary battery such as a lithium ion battery and a lithium polymer battery, or a portable storage battery.

As used herein, the "cell pouch" is a cell pouch in which cell constituent elements such as a positive electrode, a negative electrode, and a separator are received while being impregnated in an electrolytic solution, and has the widest meaning which includes all the cell pouches in which a film having a laminated structure is processed into a pouch form or a box form, and the like in consideration of gas barrier property, flexibility, electrolytic solution resistance, heat adhesive property, and the like in order to receive the cell constituent elements.

As used herein, "barrier property" means the ability to keep water vapor out of the cell.

As used herein, "flexibility" refers to the degree of flexibility of the cell and/or cell pouch, wherein the better the flexibility, the more easily the cell and/or flexible cell pouch may be bent.

### Film for cell pouch

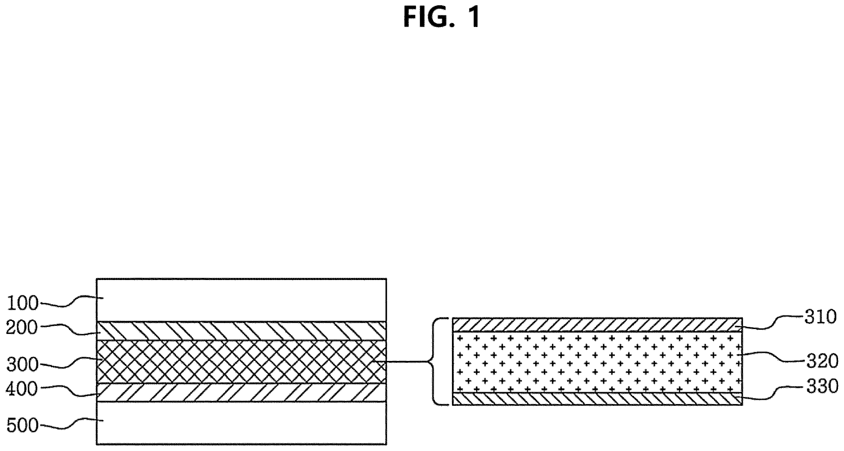

FIG. 1 is a schematic diagram illustrating a cross-section of a film according to an example embodiment of the present disclosure

Example embodiments of the present disclosure provide a film for a cell pouch, including a barrier layer 300 made of metal with surface treatment on both sides, adhesive layers 200, 400 formed on both sides of the barrier layer, and functional fabric layers 100, 500 formed on both sides of the adhesive layers 200, 400, wherein the difference between a machine direction (MD) breaking strength and a transverse direction (TD) breaking strength is 40 N/15 mm or less.

An example embodiment of the present disclosure provides a film for a cell pouch including a sealant layer 500, an inner adhesive layer 400 laminated on the sealant layer 500, a barrier layer 300 laminated on the inner adhesive layer 400, an outer adhesive layer 200 laminated on the barrier layer 300, and an outer layer 100 formed on the outer adhesive layer 200, wherein the barrier layer 300 includes a metal layer 320 and surface treatment layers 310, 330 uniformly coated on both sides of the metal layer 320.

In one example embodiment, an extruded resin layer may be further formed between the adhesive layer and the functional fabric layer. The extruded resin layer may improve the flexibility, adhesion, insulation, and the like, of the pouch. The extruded resin layer comprises an olefin-based resin, such as a polypropylene-based resin. The extruded resin layer may have a thickness of about 5 to 80 µm. Alternatively, an inner layer of the film for the cell pouch may be formed with the extruded resin layer and the sealant layer without the inner adhesive layer. The extruded resin layer may serve as the inner adhesive layer in the absence of the inner adhesive layer as described above.

In one example embodiment, the barrier layer may block the entry of moisture or air from the outside and the exit of gases generated inside. The barrier layer is not limited as long as it is a metal having gas barrier properties. The barrier layer may comprise one or more selected from a metal thin film and a metal vapor deposition layer. In this case, the metal thin film may be a metal foil or the like, and the metal vapor deposition layer may be formed by vacuum deposition on a separate plastic film, such as a film of polyethylene terephthalate (PET), polyethylene (PE), or polypropylene (PP) or the like.

In one example embodiment, the difference between the machine direction (MD) breaking strength and the transverse direction (TD) breaking strength of the film is 40 N/15 mm or less. More specifically, the difference between the machine direction (MD) breaking strength and the transverse direction (TD) breaking strength of the film may be, but is not limited to, 5 N/15 mm or more, 10 N/15 mm or more, 15 N/15 mm or more, 20 N/15 mm or more, 23 N/15 mm or more; 40 N/15 mm or less, 35 N/15 mm or less, 30 N/15 mm or less, 25 N/15 mm or less, or 23 N/15 mm or less.

The present disclosure utilizes a 1 Pass 3 Coating (1P3C) in-line method in which three or more coating processes may be performed in one facility according to the manufacturing method of the present disclosure, rather than repeating the sequence of coating, drying, and winding for each process as in the conventional method. As a result, the probability of traveling losses and process defects occurring during the transportation of the fabric may be reduced. Furthermore, according to the method of the present disclosure, the process speed is high, the stress applied to the film is reduced by reducing the number of windings, and the tension of the driving roll that transports the film is low, which does not cause a change in the tensile curve of the film, and the machine direction (MD) and transverse direction (TD) mechanical strength of the film does not change.

In one example embodiment, the functional fabric layer formed on one side of the adhesive layer is an outer layer comprising a synthetic resin fabric, and the functional fabric layer formed on the other side of the adhesive layer is a sealant layer comprising a sealant fabric.

In one example embodiment, the sealant layer may comprise a sealing resin for thermal bonding, such that the cells are embedded as an inner layer and then bonded by heat to impart a sealing property.

In one example embodiment, the film has a transverse direction (TD) breaking strength of 250 N/15 mm or less. More specifically, the transverse direction (TD) breaking strength of the film may be, but is not limited to, 150 N/15 mm or more, 160 N/15 mm or more, 170 N/15 mm or more, 180 N/15 mm or more, 190 N/15 mm or more, 200 N/15 mm or more, 210 N/15 mm or more, 220 N/15 mm or more, 230 N/15 mm or more, 231 N/15 mm or more; 250 N/15 mm or less, 240 N/15 mm or less, 231 N/15 mm or less.

In one example embodiment, the difference between the machine direction (MD) elongation and the transverse direction (TD) elongation of the film is 6% or less. More specifically, the difference between the machine direction (MD) elongation and the transverse direction (TD) elongation of the film may be, but is not limited to, 0% or more, 1% or more, 2% or more, 3% or more; 6% or less, 5% or less, 4% or less, or 3% or less.

In one example embodiment, the product of the difference (N/15 mm) of the machine direction (MD) breaking strength and the transverse direction (TD) breaking strength of the film, and the product (%) of the difference (N/15 mm) of the machine direction (MD) elongation and the transverse direction (TD) elongation of the film is 240 or less. More specifically, the product of the difference in breaking strength (N/15 mm) and the difference in elongation (%) may be, but is not limited to, 5 or more, 10 or more, 15 or more, 20 or more, 25 or more, 30 or more, 35 or more, 40 or more, 45 or more, 50 or more, 55 or more, 60 or more, 65 or more, 70 or more, 75 or more, 80 or more, 85 or more, 90 or more, 95 or more, 99 or more; 200 or less, 190 or less, 180 or less, 170 or less, 160 or less, 150 or less, 140 or less, 130 or less, 120 or less, 110 or less, 100 or less, 99 or less. When the product of the difference (N/15 mm) of the breaking strength and the difference (%) of the elongation is in the above range, the film for the cell pouch has a uniform property in the machine direction (MD) and the transverse direction (TD), so that the stress applied to the film may be uniformly distributed during the forming and processing of the film for the cell pouch. This may improve formability and durability by delaying the accelerated development of cracks due to stress concentration in one direction.

In one example embodiment, both the machine direction (MD) formability and the transverse direction (TD) formability of the film are both 16.5 mm or more. When the depth is measured after molding on a cut specimen of the film for the cell pouch, the deeper depth is used unless all 10 out of 10 of the film's layers are broken, in which case the depth immediately preceding the depth at which any one of the layers is broken is referred to as the maximum height of formability. More specifically, both the machine direction (MD) formability and the transverse direction (TD) formability of the film may be both 16.5 mm or more, but are not limited thereto. When forming a film for a cell pouch, the shape formed is typically a rectangular shape (e.g., 190 mm width and 90 mm length) rather than a square shape. For example, the longitudinal direction (MD) formability of the film means that the rectangular shape to be molded is 190 mm in width (TD) and 90 mm in length (MD). Width direction (TD) formability means that the rectangular shape to be molded is 190 mm in length (MD) and 90 mm in width (TD).

In one example embodiment, the metal forming the barrier layer, and more specifically, the metal forming the metal thin film or metal deposition layer, is, for example, one or more (a single metal or a mixture of single metals) selected from the group consisting of aluminum (Al), iron (Fe), copper (Cu), nickel (Ni), tin (Sn), zinc (Zn), indium (In), and tungsten (W), or an alloy of two or more selected from the group consisting of aluminum (Al), iron (Fe), copper (Cu), nickel (Ni), tin (Sn), zinc (Zn), indium (In), and tungsten (W), and the like. In one example embodiment, the metal of the barrier layer is aluminum or an alloy thereof. The barrier layer is required to have properties such as formability along with barrier properties to water vapor or other gases. Further, the barrier layer may be surface treated by phosphoric acid or chromium or the like for corrosion resistance.

In one example embodiment, the outer layer comprises one or more resins selected from the group consisting of polyethylene terephthalate (PET) resins and nylon resins. The outer layer is required to have properties such as heat resistance, pinhole resistance, chemical resistance, abrasion resistance, formability, and insulation. The outer layer may comprise a plurality of layers. In one example embodiment, the outer layer comprises a polyethylene terephthalate (PET) resin and a nylon resin.

In one example embodiment, the sealant layer comprises one or more polyolefin resins selected from the group consisting of polypropylene, low density polyethylene, linear low density polyethylene, ultra low density polyethylene, medium density polyethylene, high density polyethylene, polybutene, and ethylene/propylene copolymers. The sealant layer is required to have properties such as heat resistance, cold resistance, thermal adhesion, and formability, as well as electrolyte and insulation resistance in that it is a layer in contact with an electrolyte. The sealant layer may comprise a plurality of layers.

In one example embodiment, the surface treatment layer may be a surface treatment layer by phosphoric acid or chromium, zirconium, cerium, lanthanum, or the like, to provide corrosion resistance of the metal.

In one example embodiment, the adhesive layer may comprise one or more of an epoxy-based adhesive, a polyurethane-based adhesive, a phenolic resin-based adhesive, a polyester-based adhesive, and a polyolefin-based adhesive. In one example embodiment, the inner adhesive layer and outer adhesive layer may each have a thickness of 0.5 µm to 10 µm.

In one example embodiment, the barrier layer may have a thickness of from 5 µm to 100 µm. If the barrier layer has a thickness of less than 5 µm, implementation as a cell pouch of a secondary battery is not easy, and if the barrier layer has a thickness of more than 100 µm, the cell capacity of the cell pouch may be drastically reduced in a flexibility test.

In one example embodiment, the outer layer may have a thickness of from 5 µm to 50 µm. In one example embodiment, the sealant layer may have a thickness of 5 µm to 100 µm.

In one example embodiment, an extruded resin layer may be further formed between the inner adhesive layer and the sealant layer. The extruded resin layer may improve the flexibility, adhesion, insulation, and the like, of the pouch. As one example embodiment, the extruded resin layer may comprise an olefin-based resin, such as a polypropylene-based resin. As another example embodiment, an inner layer of a film for a cell pouch may be formed with the extruded resin layer and the sealant layer without the inner adhesive layer. The extruded resin layer may serve as an inner adhesive layer in the absence of an inner adhesive layer as described above. In one example embodiment, the extruded resin layer may have a thickness of 5 µm to 80 µm.

### Cell pouch

A film for a cell pouch according to one example embodiment of the present disclosure has excellent gas barrier properties, flexibility, electrolyte resistance, and thermal adhesion, and is therefore suitable for use in cell pouches.

Other example embodiments of the present disclosure provide a cell pouch comprising a film for a cell pouch according to an example embodiment of the present disclosure.

### Manufacturing method of a film for a cell pouch

Other example embodiments of the present disclosure provide a method of manufacturing a film for a cell pouch, including surface treating both sides of a metal fabric forming a barrier layer, coating one side by applying an adhesive to one side of the surface treated metal fabric to form an adhesive layer, and laminating a functional fabric to one side of the adhesive layer to form a functional fabric layer.

The present disclosure utilizes a 1 Pass 3 Coating (1P3C) in-line method in which three or more coating processes may be performed in one facility according to the manufacturing method of the present disclosure, rather than repeating the sequence of coating, drying, and winding for each process as in the conventional method. As a result, the probability of traveling losses and process defects occurring during the transportation of the fabric may be reduced. Furthermore, according to the method of the present disclosure, the process speed is high, the stress applied to the film is reduced by reducing the number of windings, and the tension of the driving roll that transports the film is low, which does not cause a change in the tensile curve of the film, and the machine direction (MD) and transverse direction (TD) mechanical strength of the film does not change.

The double-sided surface treatment step is a process of surface treating both sides of the metal fabric forming the metal layer with a first and second coating, wherein the double-sided surface treatment step is performed by a double-sided double coating means, which may include a first coater and a second coater.

The double-sided surface treatment step may include a fabric feeding process in which a wound metal fabric is unwound and fed, a debris removal process in which a debris present on a surface of the fed metal fabric is removed, a tensioning process in which a tension of the metal fabric from which the debris on the surface is removed is adjusted, and a double-sided double coating process in which a coating is applied to both sides of the metal fabric in which a constant tension is maintained.

The debris removal process may include a first debris removal process in which an electrical discharge treatment is performed on both surfaces of the metal fabric to remove oil. Further, the debris removal process may further include a pinhole inspection process to determine whether pinholes occur on both surfaces of the metal fabric from which the oil has been removed. Further, the debris removal process may further include a second debris removal process of rolling away debris occurring on both surfaces of the metal fabric subjected to the pinhole inspection.

One surface of the metal fabric is subjected to a first coating by a first coater that applies a water-based and solvent-based coating solution in a combination of direct coating and reverse kiss coating (RKC), taking into account the physical properties and changes of the coating solution. The other side surface of the metal fabric may be subjected to a second coating in which a coating solution is applied in a RKC and film up/down coating method. On the other hand, by configuring the substrate contact surface and the position of the coating roll and the doctor to be adjustable, it is possible to improve the uniformity of the coating and the work speed. In particular, by configuring the chamber method (sealed piping) for precise control of the coating agent, the viscosity of the coating agent may be adjusted, and the flow of foreign substances may be prevented at source.

Between the double-sided surface treatment step and the one-sided coating step forming the adhesive layer, the method may further include a property stabilizing drying step in which the metal fabric having both surfaces coated is dried in a floating manner to stabilize the properties, a cooling step in which the dried metal fabric is cooled, and a surface inspection step in which the surface of the cooled metal fabric is inspected.

After the double-sided surface treatment step is completed, the metal fabric having a coating on both surfaces may be dried by a floating method to stabilize its physical properties. The drying method may be air floating, which allows the coated substrate to be dried contactlessly in a suspended state. This allows for the drying of metal fabrics with double-sided surface treatments with minimal contact with configurations such as transport rolls. The dried metal fabric may then be cooled, and the surface of the cooled metal fabric may be inspected.

The step of coating one side to form the adhesive layer is a process of applying an adhesive to one side of a metal fabric that has been surface treated by two coatings, and is performed by a third coater, and is prepared for lamination by drying or the like. After applying the adhesive, the metal fabric to which the adhesive is applied is dried to form an adhesive layer, and the thickness of the dried adhesive layer is measured, and the surface of the adhesive layer may be corona treated to strengthen the adhesion.

An example embodiment of the method may further include, after the laminating step, a coating step, wherein an inner adhesive is applied to the other one side of the metal fabric where the outer layer is not laminated to form an inner adhesive layer. An example embodiment may further include a drying step after the coating step. An example embodiment may further include the step of laminating a sealant layer fabric to the underside of the inner adhesive layer.

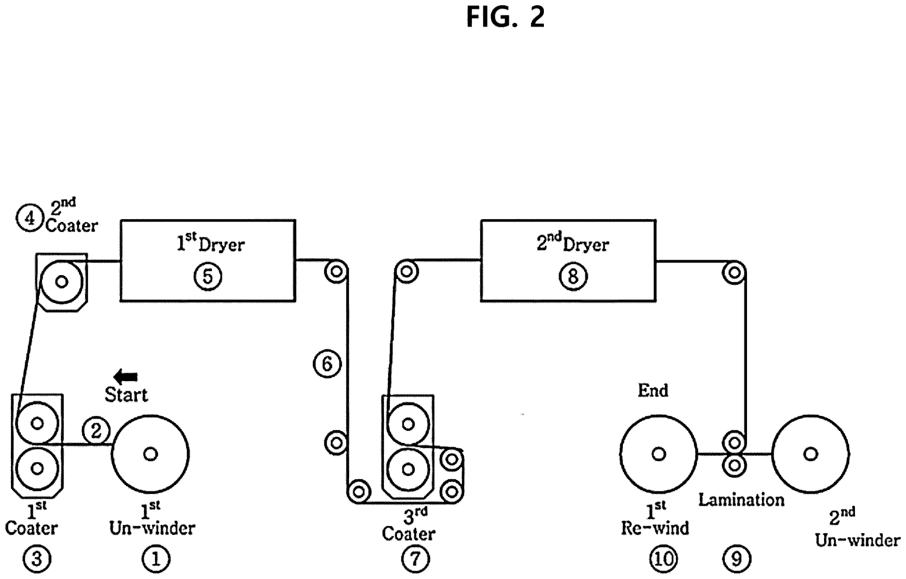

In one example embodiment, the method may include no more than two total winding steps to prevent stamping and/or pressing of the fabric used in each step up to the outer layer laminating step. More specifically, the metal fabric may be wound no more than two times in total. More specifically, the winding step may include a total of one winding step. In an example embodiment, the winding step may be included after the step of coating the outer surface adhesive layer and before the step of laminating the outer fabric. For example, the winding step may be performed at step 10 of FIG. 2.

In one example embodiment, the step of laminating the outer layer fabric on top of the outer adhesive layer and the step of laminating the sealant layer fabric on the bottom of the inner adhesive layer are each a process of laminating functional fabrics on one side of the metal fabric on which the adhesive is applied, wherein the inner side may be laminated with the sealant layer fabric mainly for stabilizing the heat resistance and cold resistance of the battery, and the outer side may be laminated with the outer layer fabric for heat resistance, pinhole resistance, abrasion resistance, and the like. In one example embodiment, each of the laminating steps above may be laminating a pre-prepared outer layer fabric or sealant fabric.

Between the third coating step and the laminating step, the method may further include an adhesive drying step, wherein the metal fabric to which the adhesive is applied is dried to form an adhesive layer, an adhesive layer thickness measuring step, wherein the thickness of the dried adhesive layer is measured, and an adhesive layer surface treatment step, wherein the surface of the adhesive layer is corona treated to strengthen the adhesion.

After the laminating step, the method may further include a surface inspection step wherein the surface of the sealant layer or outer layer is inspected.

Meanwhile, to minimize the occurrence of debris and scratches in the process of transporting each fabric, the guide roll may be equipped with both a tendency structure that separately drives the material contact roll and the shaft and a shaft structure that operates as an integral unit. The general drive method of the guide roll transmits the rotation from the motor to the shaft-integral guide roll and drives it at a 1:1 speed, while the tendency drive method is a structure that separates the guide roll and the shaft to mutually compensate the fine rotation speed of the rolls, and may be applied to required sections.

On the other hand, a re-winder and un-winder (fabric feeding part) may be provided separately so that they may be operated separately when there is a problem with the equipment.

Further, the present disclosure may further include an aging step as an example embodiment. The aging step is a necessary process to improve the reliability of adhesion, electrolyte resistance, peel strength, etc. in the manufacture of the cell pouch, but it takes a rather long time, so an optimal aging process is important. It is desirable from a productivity point of view to manufacture a product by performing only one aging process for the final structure of the cell pouch. Specifically, the method may include a one-time aging step. More specifically, the method may comprise applying an adhesive to one side of the surface treated metal fabric without an aging step after the double-sided surface treatment step, and the aging step may be included after a lamination step of the sealant layer. For example, if the aging step is included at the double-sided surface treatment step before the laminating step, desorption of the unlaminated surface treatment agent may occur as the film in the intermediate stage of manufacturing is exposed to air for a certain period of time or more. For example, if the aging step is included at an adhesive layer formation step, a partial reaction of the adhesive layer may occur, resulting in a blocking phenomenon in which the adhesive layer subsequently sticks to another layer.

The first intermediate structure of a film for a cell pouch may include a structure of an outer layer/adhesive layer/surface treatment layer/barrier layer/surface treatment layer/adhesive layer, and the second intermediate structure may include a structure of an outer layer/adhesive layer/surface treatment layer/barrier layer/surface treatment layer. If it is unavoidable to age twice, it is preferable to age the first time with the second intermediate structure and then age the second time with the final structure. If the first aging is performed with the first intermediate structure, problems such as manufacturing process problems, physical property degradation, and the like may occur. More specifically, products that have undergone primary aging with the first intermediate structure may undergo a partial reaction of the inner adhesive layer (sealant layer side), resulting in a blocking phenomenon where the inner adhesive layer sticks to the outer layer.

In addition, when forming the sealant layer after primary curing, additional processes are required to strengthen the adhesion to the inner adhesive layer, which may lead to a decrease in productivity.

Meanwhile, a suction roll may be applied to the tension control section to minimize the occurrence of debris and scratches during the transport of the fabric, and a contact clean roll may be applied to remove debris to prevent debris generated during the transport from adhering to the roll and causing cosmetic defects (stamping, scratches, etc.).

In one example embodiment, the transport of the film for a cell pouch is performed by a drive roll, wherein all or part of the drive roll is a suction roll. The suction roll comprises a plurality of holes for sucking air from peripheral faces. As the holes draw in air, the film is drawn into contact with the peripheral surfaces of the suction roll.

In one example embodiment, the tension applied to the film for a cell pouch by the suction roll is from 0.02 kgf/cm² to 2.5 kgf/cm².

In one example embodiment, in the process of manufacturing a film for a cell pouch, the metal fabric of the film for a cell pouch is wound no more than two times in total.

### Manufacturing device of a film for a cell pouch

Other example embodiments of the present disclosure provide a manufacturing device for a film for a cell pouch, including a double-sided surface treatment means including a first coater 3 and a second coater 4 for surface treating both sides of a metal fabric forming a barrier layer, a third coater 7 for applying an adhesive to one side of the surface treated metal fabric, and a laminating section 9 for laminating a functional fabric to one side of the adhesive layer.

FIG. 2 is a mimetic diagram illustrating a manufacturing device for a film for a cell pouch according to an example embodiment of the present disclosure.

The double-sided surface treatment means may include a fabric feeding part 1, a debris removal means 2, a tension control part, and a first coater 3 and a second coater 4. The fabric feeding part 1 unwinds and supplies a wound metal fabric. The debris removal means 2 removes debris present on the surface of the supplied metal fabric. The tension control part controls the tension of the metal fabric from which the debris on the surface has been removed. The first coater 3 and the second coater 4 perform coating on both sides of the metal fabric under constant tension. The debris removal means 2 may include a first debris removal part that performs an electrical discharge treatment on both surfaces of the metal fabric to remove oil. It may further include a pinhole inspection part for checking whether pinholes occur on both surfaces of the metal fabric from which the oil is removed. It may further include a second debris removal part that removes debris occurring on both surfaces of the metal fabric in a rolling manner if there is no abnormality as a result of the check.

Between the double-sided surface treatment means and the third coater 7, a property stabilizing drying part 5 may be formed in which the metal fabric with coated surfaces on both sides is dried by a floating method to stabilize the properties. In this case, the drying method may be an air floating method so that the coated substrate may be dried contactlessly in a suspended state. This allows the double-sided coated metal fabric to be dried while minimizing contact with configurations such as transport rolls. Subsequently, the dried metal fabric may be cooled by a cooling part 6, and the surface of the cooled metal fabric may be inspected by a surface inspection part.

Between the third coater 7 and the laminating section 9, the device may further include an adhesive drying part 8 for drying the metal fabric to which the adhesive is applied to form an adhesive layer, an adhesive layer measuring part for measuring the thickness of the dried adhesive layer, and an adhesive layer surface treatment part for corona treating the surface of the adhesive layer to strengthen the adhesion.

In addition to the laminating section 9, the device may further comprise a surface inspection section for inspecting the surface of the sealant layer and outer layer.

A fourth coater (not illustrated), a drying section (not illustrated), a functional layer j oining section (not illustrated), an extrusion section (including co-extrusion) (not illustrated), and the like applying adhesive to the other side of the surface treated metal fabric between the laminating section 9 and the end (2^{nd} rewind) section of FIG. 2 may be added as needed.

Hereinafter, the present disclosure is described in detail with reference to preferred embodiments so as to facilitate practice by a person skilled in the art. However, the present disclosure may be practiced in many different forms and is not limited to the embodiments described herein.

### {Examples}

### <Manufacture Example 1> Manufacture of a film for a cell pouch

Both sides of an aluminum foil metal fabric forming a barrier layer were surface treated with first and second coatings. The metal fabric with coated surfaces on both sides was then dried by floating method to stabilize its physical properties. The dried metal fabric was then cooled, and a urethane-based adhesive was applied to one side of the surface treated metal fabric by a third coater to form an adhesive layer. Then, a pre-prepared PET/nylon film was laminated to one side of the adhesive layer to form an outer layer. An adhesive was applied to the other side of the adhesive layer, and a sealant layer was formed by laminating an unstretched polypropylene film (cast polypropylene film, CPP film), and a film for a cell pouch was manufactured and wound (Example 1: a sample was taken at a point 700 meters from the main tube in a roll of a total of 2,000 meters wound; Example 2: a sample was taken at a point 1,300 meters from the main tube in a roll of a total of 2,000 meters wound; Example 3: a sample was taken at a point 1,900 meters from the main tube in a roll of a total of 2,000 meters wound).

### <Manufacture Example 2> Manufacture of a film for a cell pouch

One side of an aluminum foil metal fabric forming a barrier layer was surface treated with a first coating, dried, and wound. The other side of the aluminum foil metal fabric forming the barrier layer was surface treated with a second coating, dried, and wound. One side of the aluminum foil metal fabric surface treated on both sides was coated with a urethane-based adhesive, dried, and laminated with a pre-prepared PET/nylon film to form an outer layer, which was then wound. Then, after coating and drying the inner adhesive, the inner layer (sealant film) was laminated and wound (Comparative Example 1: a sample was taken at a point 700 meters from the main tube in a roll of a total of 2,000 meters; Comparative Example 2: a sample was taken at a point 1,300 meters from the main tube in a roll of a total of 2,000 meters; Comparative Example 3: a sample was taken at a point 1,900 meters from the main tube in a roll of a total of 2,000 meters).

### <Experimental Example 1> Evaluating the difference between machine direction (MD) and transverse direction (TD) properties of a film

Differences in machine direction (MD) and transverse direction (TD) properties were evaluated for films for cell pouches prepared in Manufacture Example 1 and Manufacture Example 2.

More specifically, a specimen of 130 mm × 15 mm in the machine direction (MD) and transverse direction (TD) directions was taken from a wound roll. The specimen was tested for tensile strength using a UTM (manufacturer: INSTRON) universal testing machine in accordance with ASTM D638 at an elongation rate of 50 mm/min and a distance between grips of 50 mm. Breaking strength, which is the strength at the time the specimen is cut and broken, was measured, and elongation was measured by marking a 30 mm length in the middle of the specimen and measuring the elongation after breaking.

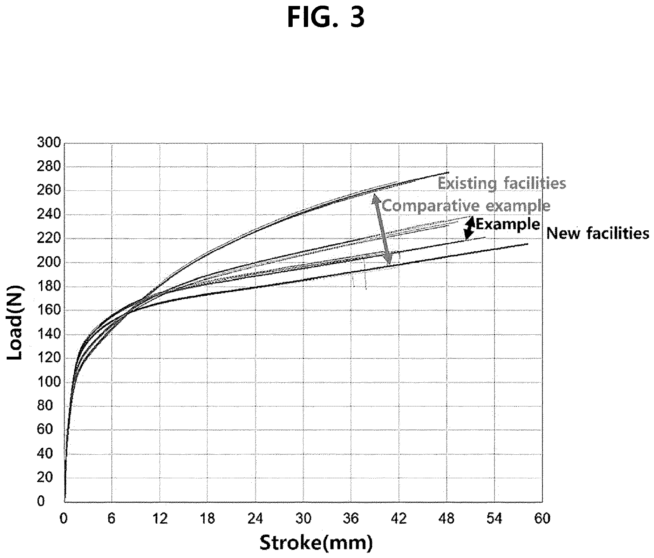

The results are shown in FIG. 3 and in Table 1 and Table 2 below. FIG. 3 is a stress-strain curve of a film for a cell pouch according to an example embodiment of the present disclosure.

**[Table 1]**

| **Breaking strength (N/15 mm)** | **Example 1** | **Example 2** | **Example 3** | **Comparativ e Example 1** | **Comparativ e Example 2** | **Comparativ e Example 3** |
|---|---|---|---|---|---|---|
| **MD** | 221 | 205 | 209 | 200 | 209 | 216 |
| **TD** | 231 | 238 | 232 | 275 | 255 | 268 |
| **Difference** | 10 | 33 | 23 | 75 | 46 | 52 |

**[Table 2]**

| **Elongation (%)** | **Example 1** | **Example 2** | **Example 3** | **Comparativ e Example 1** | **Comparativ e Example 2** | **Comparativ e Example 3** |
|---|---|---|---|---|---|---|
| **MD** | 73 | 70 | 67 | 90 | 73 | 83 |
| **TD** | 70 | 73 | 70 | 63 | 66 | 64 |
| **Difference** | 3 | 3 | 3 | 27 | 7 | 19 |

From FIG. 3 and Tables 1 and 2, it may be seen that a film for a cell pouch according to the present disclosure has good mechanical strength and also has a low deviation of mechanical strength.

### <Experimental Example 2> Evaluation of the difference between the machine direction (MD) and transverse direction (TD) formability of a film

Differences in machine direction (MD) and transverse direction (TD) properties were evaluated for films for cell pouches prepared in Example 1 and Example 2.

More specifically, a specimen of 266 mm × 240 mm in the machine direction (MD) and transverse direction (TD) directions was taken from the wound roll. The taken specimen was molded into a rectangular shape (190 mm width by 90 mm length) (formability evaluated at 1 cup on a chrome-coated, high-performance pouch formability evaluation machine; R-values vary, but the reference corner R-value is 4).

When measuring the depth after molding, the deeper depth is used unless all 10 out of 10 are broken at that depth, and if any of them are broken, the depth immediately before that was defined as the maximum height of formability.

Longitudinal direction (MD) formability means that the rectangular shape to be molded is 190 mm in width (TD) and 90 mm in length (MD). Width direction (TD) formability means that the rectangular shape to be molded is 190 mm in width (MD) and 90 mm in length (TD). The results are shown in Table 3 below.

**[Table 3]**

| **Formability (mm)** | **Example 1** | **Example 2** | **Example 3** | **Comparativ e Example 1** | **Comparativ e Example 2** | **Comparativ e Example 3** |
|---|---|---|---|---|---|---|
| **MD** | 17.0 | 17.0 | 16.5 | 12.0 | 13.0 | 12.5 |
| **TD** | 17.0 | 16.5 | 17.0 | 11.5 | 12.0 | 10.5 |

From Table 3, it may be seen that the film for a cell pouch according to the present disclosure has the best formability.

While example embodiments of the present disclosure have been described above with reference to the above-mentioned preferred embodiments, it is possible to make various modifications or variations without departing from the spirit and scope of the disclosure. Accordingly, the appended claims will include such modifications or variations as long as they fall within the spirit of the present disclosure.

### [Explanation of reference numerals]

| | | | |
|---|---|---|---|
| 1: | fabric feeding part | 2: | debris removal means |
| 3: | first coater | 4: | second coater |
| 5: | property stabilizing drying part | 6: | cooling part |
| 7: | third coater | 8: | adhesive drying part |
| 9: | laminating section | 10: | final winding part |
| 100: | outer layer | 200: | outer adhesive layer |
| 300: | barrier layer | 310: | surface treatment layer |
| 320: | metal layer | 330: | surface treatment layer |
| 400: | inner adhesive layer | 500: | sealant layer |

## Claims

1. A film for a cell pouch, comprising:
a barrier layer made of metal and with surface treatment on both sides;
adhesive layers formed on both sides of the barrier layer; and
functional fabric layers formed on both sides of the adhesive layer,
wherein the difference between a machine direction (MD) breaking strength and a transverse direction (TD) breaking strength is 40 N/15 mm or less.

2. The film of claim 1,
wherein the functional fabric layer formed on one side of the adhesive layer is an outer layer composed of a synthetic resin fabric, and
wherein the functional fabric layer formed on the other side of the adhesive layer is a sealant layer composed of a sealant fabric.

3. The film of any one of claims 1 and 2, wherein a transverse direction (TD) breaking strength of the film is 250 N/15 mm or less.

4. The film of any one of claims 1 to 3, wherein the difference between the machine direction (MD) elongation and the transverse direction (TD) elongation of the film is 6% or less.

5. The film of any one of claims 1 to 4, wherein the product of the difference (N/15 mm) of the machine direction (MD) breaking strength and the transverse direction (TD) breaking strength of the film, and the product (%) of the difference (N/15 mm) of the machine direction (MD) elongation and the transverse direction (TD) elongation of the film is 240 or less.

6. The film of any one of claims 1 to 5, wherein the machine direction (MD) formability and the transverse direction (TD) formability of the film are both 16.5 mm or more.

7. The film of any one of claims 2 to 6,
wherein the metal of the barrier layer is aluminum or an alloy thereof,
wherein the outer layer comprises one or more resins selected from the group consisting of polyethylene terephthalate (PET) resins and nylon resins, and
wherein the sealant layer comprises one or more polyolefin resins selected from the group consisting of polypropylene, low density polyethylene, linear low density polyethylene, ultra low density polyethylene, medium density polyethylene, high density polyethylene, polybutene, and ethylene/propylene copolymers.

8. A cell pouch comprising the film for a cell pouch according to any one of claims 1 to 7.

9. A method of manufacturing the film for a cell pouch according to any one of claims 1 to 7, comprising:
surface treating both sides of a metal fabric forming a barrier layer;
coating one side by applying an adhesive to one side of the surface treated metal fabric to form an adhesive layer; and
laminating a functional fabric to one side of the adhesive layer to form a functional fabric layer.

10. The method of claim 9, wherein the transport of the film for a cell pouch is performed by a drive roll, and all or part of the drive roll is a suction roll.

11. The method of claim 10, wherein the tension applied to the film for a cell pouch by the suction roll is from 0.02 kgf/cm² to 2.5 kgf/cm².

12. The method of any of claims 10 or claim 11, wherein in the process of manufacturing a film for a cell pouch, the metal fabric of the film for a cell pouch is wound no more than two times in total.
